# EUROPEAN PATENT SPECIFICATION

(11) **EP 3 476 208 B1**
(45) Date of publication and mention of the grant of the patent: **16.12.2020**
(21) Application number: 18203486.8
(22) Date of filing: 30.10.2018
(51) Int. Cl.: A01G 9/24

(54) **AIR CONDITIONER USING LIGHT AND GREEHOUSE INCLUDING THE SAME**
KLIMAANLAGE MIT LICHT UND GEWÄCHSHAUS DAMIT
CLIMATISEUR UTILISANT DE LA LUMIÈRE ET SERRE LE COMPRENANT

(30) Priority: 30.10.2017 KR 20170142689
(43) Date of publication of application: 01.05.2019
(73) Proprietor: Korea Institute of Energy Research, Daejeon 34129 (KR)
(72) Inventor: IM, Yonghoon, 34129 Daejeon (KR); YOON, Siwon, Gangneung-si, Gangwon-do 25536 (KR); CHANG, Kichang, Daejeon 34021 (KR)
(74) Representative: MacDougall, Alan John Shaw

(56) References cited:
- CN-A- 106 234 197
- CN-U- 203 215 870
- CN-U- 205 198 538
- DE-U1-202016 104 131
- US-A1- 2016 325 606

## Description

### FIELD OF THE INVENTION

The present invention relates to air conditioner using light and greenhouse including the air conditioner, which is available for air cleaning such as humidity control, antibacterial activity, sterilizing, and deodorization. It will reduce costs of installment as its structure is simple and easily installed at the wall of the greenhouse, and also costs of the crop growth as the loss of the heat is minimized.

### BACKGROUND OF THE INVENTION

Crops have been selected optimally for soil, climate, season and etc. and grown in the bare ground, but needs to counteract the uncertainty of abnormal climate and meet customer's demands all through the year leads to the expansion of the industry of the facility horticulture.

In the facility horticulture, the crops are planted at the planting-site in the vinyl greenhouse or glasshouse and grown under the control of optimal environmental condition such as temperature, humidity, CO₂.

The greenhouse has skeletal frame and light-transmission planar-surface member of glass or vinyl.

Also, it has subsidiary facilities to adjust environmental condition such as heating apparatus and cooling apparatus to adjust temperature, CO₂ providing apparatus to adjust concentration of CO₂. However, in order to clean air, side windows and ceiling windows are just controlled to be close or open and air cleaner has been not used in general because it costs high and is complicate although air conditioner is disclosed in Korea patent No. 10-1578187.

This conventional air cleaning method could affect the growth of the crop badly as rapid change of outer environment causes rapid change of the inner environment, and has a disadvantage of the increase of the growth cost as it causes the energy loss and therefore the increase of the heating or cooling cost.

Also, the conventional air cleaning method to control the windows is useful to adjust the humidity but is not good to remove volatile organic compound in the air or sterilize pathogenic bacterium.

### Reference Document

KOREA patent No. 1578187 "Air conditioning structure for greenhouse"
KOREA patent No.0785930 "Automatic greenhouse system for cleaning inner air"
KOREA patent No.1578085 "Heat pump system in greenhouse for heating, cooling and dehumidifying"

US 2016/0325606 discloses a photocatalyst device including: a body, a light source part fixed to the body to irradiate ultraviolet light and having an LED and a substrate for fixing the LED thereto; a catalyst part fixed to the body to conduct photocatalytic reaction with the light irradiated by the light source part and thus to generate superoxygen radicals; and a heat radiating part disposed on the light source part to radiate the heat generated from the light source part.

CN 106234197 A discloses a space plant culture device compring a plant growth room, a plant culture dish, a root system water supply module, a temperature control module, a humidity control module, a light illumination module, a photographing module and a controller; gas circularly passes through a draught fan and a ventilation pipeline so that the circulation of air in the growth room is realized.

CN 203 215 870 U discloses a photocatalyst sterilizing device for a plant factory comprising a case, a primarily filtering screen, an outdoor air supplement fan, an indoor circulating fan, a heat exchange bin, a separating medium filter, a water curtain filter screen, a photocatalyst screen and a light source. The device integrates functions of deodorization, resisting bacteria, purifying harmful gas, regulating the temperature and humidity, supplementing fresh air, coordinating internal circulation and the like by utilizing nanoscale photocatalyst oxidization-reduction reaction.

DE 20 2016 104131 U1 discloses agriculturally usable air cleaning system, characterized in that this planting space for the cultivation of plants, an air inlet (20) arranged at the planting space (10), an air cleaning module (30) arranged at the air inlet (20) and an air cleaning module (10) connected to and for controlling the operating state of the air cleaning module (30) comprises the main control unit, wherein the air inlet (20) has a tubular structure, wherein the air cleaning module (30) on the inner wall of the air inlet (20) applied photocatalyst and on the photocatalyst includes pointing light source.

### DETAILED DESCRIPTION OF THE INVENTION

### TECHNICAL CHALLENGE

An object of at least one embodiment of the invention is to solve aforementioned problems. The present invention is to provide air conditioner and greenhouse including the same which is available for air cleaning such as humidity control, antibacterial activity, sterilizing, and/or deodorization with using light.

Another object of at least one embodiment of the invention is to provide air conditioner and greenhouse including the same which reduce costs of installment as its structure is simple and easily installed at the wall of the greenhouse, and also costs of the crop growth as the loss of the heat is decreased.

### THE SOLUTION OF INVENTION

According to one aspect, the present invention provides air conditioner for a greenhouse using light according to another aspect of the present invention comprises air conditioning enclosure having inlet and outlet for air flow into air conditioning room which is formed inside; air blow means causing air flow that the air comes through the inlet and then goes out through the outlet; photo-catalyst member installed in the air conditioning room and formed with photo-catalyst; moisture removing means installed in the air conditioning room for removing moisture from the air which comes through the inlet; light emitting means providing the photo-catalyst member with the light for photocatalytic reaction; and moisture discharge means installed to discharge the moisture from the air conditioning room, wherein the photo-catalyst member is comprised of planar surface member with photo-catalytic layer having photo-catalyst material,
the moisture removing means is comprised of hydrophobic coating layer which is stacked over the planar surface member, and
the air conditioning enclosure has entirely or partially transparent upper part to permit the inflow of sun light.

Herein, the planar surface member is formed of non-woven fabric or woven fabric, and the hydrophobic coating layer has hydrophobic compound stacked over the non-woven fabric or the woven fabric, or hydrophobic compound stacked over filament yarn which forms the non-woven or woven fabric.

Also, plural photo-catalyst members would be installed to make zigzag flow path of the air flow. Herein, the moisture discharge means would be installed on a slant in the lower part of the air conditioning room, and the photo-catalyst member would have upper-fixing photo-catalyst member which is installed to be hung from upper part of the air condition enclosure and lower-fixing photo-catalyst member which is installed at the moisture discharge means. In addition, the moisture discharge means would be formed of transparent planar surface member of the shape of ' 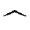 ', and the light emitting means would have implemented with plural UV light emitting diodes arranged on the printed circuit board, and would comprise outer light emitting part installed on the inner surface of the outer of the air conditioning enclosure; inner light emitting part installed on the inner surface of the inner of the air conditioning enclosure; lower light emitting part installed at the moisture discharge means; and upper light emitting part installed in the upper part of the air conditioning room.

Preferably, the light emitting means is the shape of a stick so as to be transversely installed in the air conditioning enclosure, and the photo-catalyst member is formed with woven fabric which has photo-catalytic layer and is installed to be crisscross for the light emitting means.

According to another aspect, the invention provides a greenhouse that comprises greenhouse frame; light-transmission plate installed on the greenhouse frame; and the above air conditioner installed in the side wall of the greenhouse or ceiling of the greenhouse.

Preferably, the greenhouse may comprise sensor module comprising one or more among temperature sensor, humidity sensor, illuminometer, pH sensor, electrical conductivity sensor, CO₂ sensor, and image sensor to get growing environment data in the greenhouse; and controller monitoring the greenhouse with the growing environment data from the sensor module and comparing predetermined data with the monitored data to control the drive of the air blow means and the light emitting means.

### THE EFFECT OF INVENTION

According to the air conditioner and the greenhouse including the same, as suction power of the air blow means circulates air, photocatalytic reaction using the light emitting means and photo-catalyst member removes moisture from the air and separates it with hydrophobic coating layer so as to adjust the humidity, and also various pollutants such as volatile organic compound in the air are removed so as to clean the air and sterilize pathogenic bacterium.

Also, costs of installment as the facility for humidity adjustment and air cleaning are reduced as its structure is simple and easy to be installed at the wall of the greenhouse, and also costs of the crop growth are reduced as the side windows of the greenhouse are kept close longer than before and therefore the loss of the heat is decreased. Besides, CO₂ generated by the catalytic reaction is transferred to the greenhouse and used for the photosynthesis so that cost of purchasing CO₂ gas is saved.

### BRIEF DESCRIPTION OF THE DRAWINGS

FIG. 1 is a diagram of the air conditioner using light according to first embodiment of the present invention.
FIG. 2 is a diagram for explaining first modified example of the air conditioner using light according to first embodiment of the present invention.
FIG. 3 is a diagram for explaining second modified example of the air conditioner using light according to first embodiment of the present invention.
FIG. 4 is a diagram for explaining the air conditioner using light according to second embodiment of the present invention.
FIG. 5 is a diagram for explaining the greenhouse with the air conditioner using light according to first embodiment of the present invention.

### DETAILED DESCRIPTION OF EXEMPLARY EMBODIMENTS

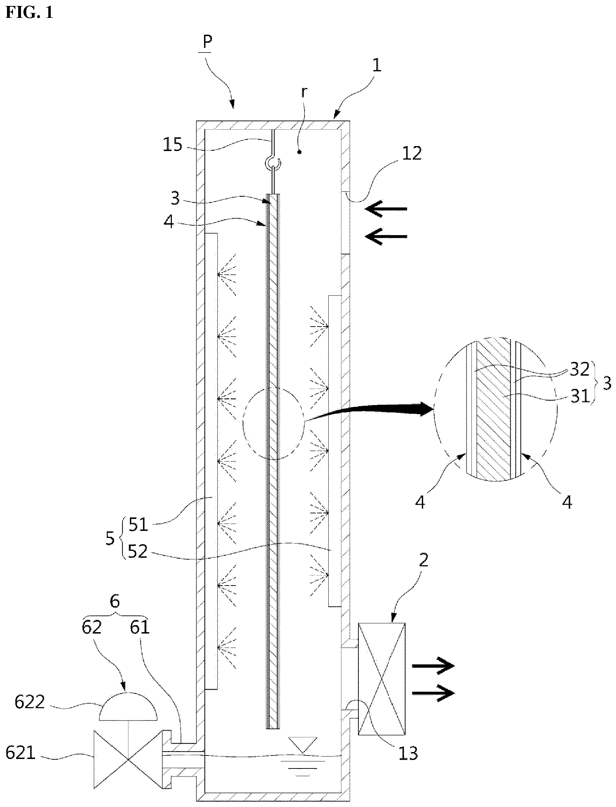

Hereinafter, exemplary embodiments according to the present invention will be described in detail referring to FIG. 1 to 5 and same numerous references are used for same components in FIG. 1 to 5. Explanation or showing of any component, which is easily understood from general technique in figures by the ordinary skilled person in the art, its function and effect is omitted or simplified. Instead, components related to feature of the present invention are mainly showed and explained.

FIG. 1 is a diagram of the air conditioner using light according to first embodiment of the present invention, showing simplified longitudinal section structure.

Referring to FIG. 1, the air conditioner using light according to first embodiment of the present invention is composed such that it could be installed in place like greenhouse where air cleaning is needed and it could achieve the humidity control, antibacterial activity, sterilizing and deodorization. And it comprises air conditioning enclosure 1, air blow means 2, photo-catalyst member 3, moisture removing means 4, light emitting means 5, and moisture discharge means.

The air conditioning enclosure has air conditioning room r where the photo-catalyst member 3 and light emitting means 5 are installed, and is cuboid made of thin plates to be installed in the side wall of the greenhouse. However, its appearance is not limited to the cuboid and would be other shape.

The air conditioning 1 has inlet 12 and outlet 13 for air flow into air conditioning room. Filter (not shown) might be installed at the inlet 12 and the outlet 13 to filter fine dust.

The air blow means 2 causes air flow from the inlet 12 to outlet 13 and therefore is installed at the inlet 12 or the outlet 13.

The photo-catalyst member 3 is installed in the air cleaning room to clean the air by photo-catalytic reaction. It would be photo-catalyst layer including photo-catalysts on the inner surface of the air cleaning enclosure 1, but it comprises of planar-surface member 31 with photo-catalyst layer 32 of photo-catalyst material in the present embodiment for more effective photo-catalytic reaction.

Herein, the planar-surface member 31 might be fixed to the air conditioning enclosure 1 with hanger 15 or fixing means. It would be any planar surface thing which the photo-catalyst material is attached to, but it is implemented with non-woven or woven fabric which the photo-catalyst layer is formed on in the present embodiment.

The photo-catalyst layer 32 comprises photo-catalyst like TiO₂, which would be replaced by metal oxide such as tungsten oxide, zinc oxide or their compound.

To explain the known function of the photo-catalyst briefly, the photo-catalyst has valence band E, conduction band D, and band gap G which the band gap G is a characteristic value of the photo-catalyst and is around 3eV or 400nm in terms of wavelength for the TiO₂. As light energy is radiated to TiO₂ photo-catalyst, a pair of electron e⁻ and hole h⁺ are generated in the photo-catalyst and extracted to the surface to be reacted with adsorbate. With this photocatalytic reaction, A is reduced to A- and alkali R is oxidized to R+.

Electron is excited to the conduction band and the hole h+ is placed to the position where the electron e- existed before excited, which is the excited state of the photo-catalyst. As the oxidizing power of the hole h+ is stronger than the reducing power of the electron e-, the pollutants such as volatile organic compound in the air of the greenhouse becomes an electron donor to the leaved hole h+ in the valence band E to oxidize and decompose the pollutants. Therefore, chemical reaction below takes place in the surface of the photo-catalyst to clean the air:

VOC(volatile organic compound) → CO₂ + H₂O + Mineral acid

Also, as light energy is radiated to the photo-catalyst, the organic matter in the air is oxidized into H₂O and CO₂ so as to deodorize. In the deodorization reaction of the photo-catalyst, O2 comes to hydrogen peroxide with reducing reaction and then to radical OH with strong oxidizing power or water and oxygen.

On the other hand, the moisture removing means 4 is installed to remove the moisture form the air coming through the inlet 12 and implemented with hydrophobic coating layer stacked on the planar surface member 31, which would be replaced by cooling means such as thermo-electric module to generate condensate water.

The hydrophobic coating layer consists of hydrophobic compound stacked over the non-woven fabric or the woven fabric, or hydrophobic compound formed with filament yarn which forms the non-woven or woven fabric. Herein, the hydrophobic compound would be implemented with various publicly known products which could separate water generated by the photocatalytic reaction.

The light emitting means 5 radiates light for the photocatalytic reaction to the photo-catalyst member 3 and would be implemented with LED module which has UV LEDs arranged in PCB. In the present embodiment, it comprises outer light emitting part 51 installed on the inner surface of the outer of the air conditioning enclosure 1 and lower light emitting part 52 installed on the inner surface of the inner of the air conditioning enclosure 1 so that the photocatalytic reaction takes place on the both sides of the photo-catalyst member. However, the installment position, size and capacity of the light emitting means 5 could be selected considering capacity, size and etc. of the photo-catalyst member 3.

The moisture discharge means 6 is installed to discharge the moisture generated in the air conditioning room and, in more detail, discharge the water which is generated by the moisture removing means 4, fallen to the lower part of the air conditioning room 1, and kept in the lower part of the air conditioning room 1.

Also, the moisture discharge means 6 would be implemented simply with nozzle 61 in the lower part of the air conditioning room 1 to discharge the water. However, it would not be effective to remove the moisture as outer air coming through the nozzle mixes with inner air of the greenhouse, and therefore it is implemented with drain valve 62 in the present embodiment.

The drain valve 62 would be implemented with passive valve, but preferably with automatic valve which consists of valve body 621 and valve controller 622 to control the close and the open of the valve body 621 as depicted simply in FIG. 1.

Also, water level detecting means (not shown) such as a level gauge is installed in the air conditioning enclosure 1 and automatic drainage is controlled by the valve controller 622 which operates to open the valve body 621 upon predetermined level of the water.

Herein after, the operation of the air conditioner using the light according to the first embodiment of the present invention will be explained briefly.

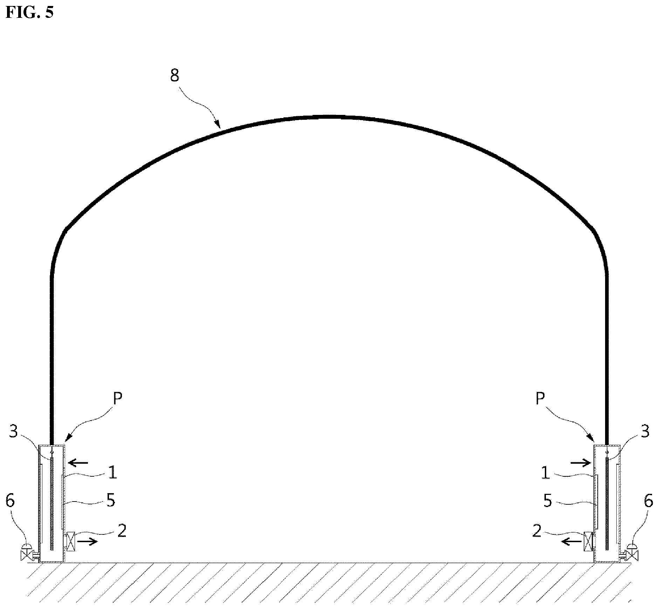

As depicted in FIG. 1, as the air conditioner using light is installed in the side wall of the greenhouse explained below (refer to FIG. 5) and the air blow means 2 operates, the air in the greenhouse comes into the air conditioning room through the inlet 12.

The air which came into the air conditioning room is discharged via the photo-catalyst member 3 by the suction power of the air blow means 2. The light emitting means 5 radiates UV light to the photo-catalyst member 3 and the photocatalytic reaction generates the water as understood with the above chemical reaction. The generated water forms the drop of the water on the hydrophobic coating layer of the moisture removing means 4, which slides downwards and falls.

On the same time, various kinds of the pollutants such as volatile organic material included in the air of the greenhouse are oxidized and decomposed by the photocatalytic reaction so that the air is cleaned and sterilized.

As stated above, the photocatalytic reaction removes the moisture in the air to adjust the humidity of the greenhouse. As the procedures are repeated, the water which is generated and fallen by the moisture removing means 4, is kept in the lower part of the air conditioning enclosure 1 and then discharged to the outer by the operation of the drain valve when it rises above the predetermined level.

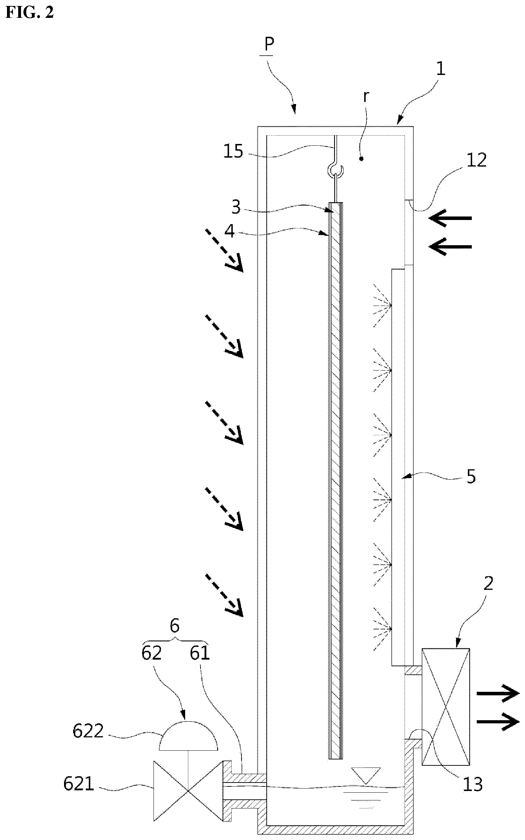

FIG. 2 is a diagram to explain a first modified example of the air conditioner using light according to first embodiment of the present invention, showing simplified longitudinal section structure.

Referring to FIG. 2, the air conditioner using light according to first modified example of the first embodiment of the present invention comprises air conditioning enclosure 1 having inlet and outlet for air flow into air conditioning room which is formed inside; air blow means 2 causing air flow that the air comes through the inlet and then goes out through the outlet; photo-catalyst member 3 installed in the air conditioning room; moisture removing means 4 installed in the air conditioning room for removing moisture from the air which comes through the inlet; light emitting means 5 providing the photo-catalyst member with the light for photocatalytic reaction; and moisture discharge means 6 installed to discharge the moisture from the air conditioning room, and features the humidity control and the air cleaning using sun light with the artificial light of the light emitting means 5.

For the feature, the air conditioning enclosure 1 is comprised of the light-transmission planar surface member to permit the coming-in of the sun light. For example, the part or the whole of the air conditioning enclosure 1 would be made of material such as transparent glass, transparent polycarbonate, transparent acryl and the whole of the air conditioning enclosure 1 is made of the light-transmission planar surface member.

Also, the light emitting means 5 is preferably installed in the inner side of the air conditioning enclosure 1 because it might block the incident rays of the sun light when installed in the outer side of the air conditioning enclosure 1.

As depicted in FIG. 2, the air conditioner using light according to first modified example of the first embodiment of the present invention takes effect of reducing the bad affection for the crop growth because the air conditioning enclosure 1 is made of the light-transmission planar surface member to make the incident rays (broke line arrow) come in the greenhouse. Also it can save the costs of the energy because the operational hours of the light emitting means 5 is shortened by the photo-catalytic reaction of the sun light.

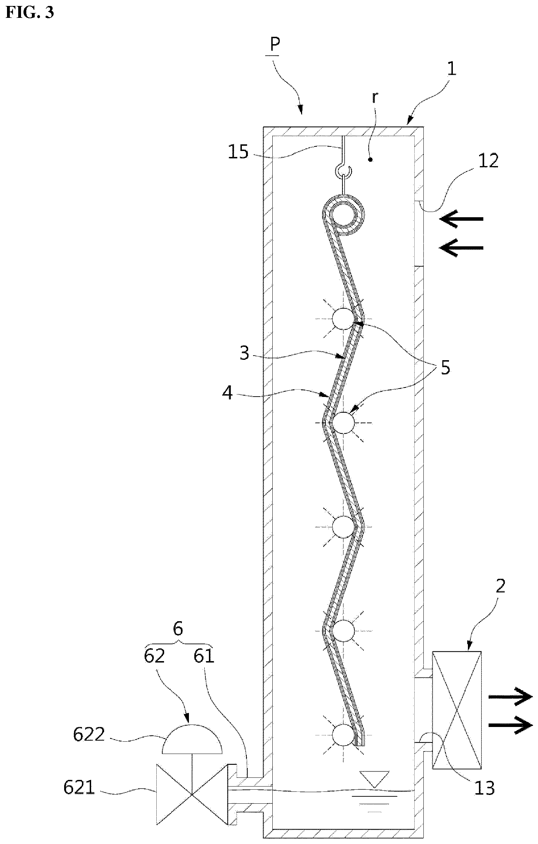

FIG. 3 is a diagram to explain a second modified example of the air conditioner using light according to first embodiment of the present invention, showing simplified longitudinal section structure.

Referring to FIG. 3, the air conditioner using light according to the second modified example of the first embodiment of the present invention comprises air conditioning enclosure 1 made of the light-transmission planar surface member, air blow means 2, photo-catalyst member 3, moisture removing means 4, light emitting means 5, and moisture discharge means 6, wherein the light emitting means 5 has a structure of the stick and is installed transverse the air conditioning enclosure 1.

The light emitting means 5 has plural transparent cylindrical members including LED module inside which are fixed and installed above and below at regular distance in the side wall of the air conditioning enclosure 1.

The photo-catalyst member 3 has the hydrophobic layer on the woven fabric where the photo-catalyst layer forms and is installed crisscross at the light emitting means 5 of the stick shape.

As depicted in FIG. 3, the air conditioner using light according to the second modified example of the first embodiment of the present invention takes effects of saving the costs of the energy because the operational hours of the light emitting means 5 is shortened by the photo-catalytic reaction of the sun light, and performing the moisture removal and the air cleaning because the crisscross installment of the photo-catalyst member 3 at the light emitting means 5 of the stick shape makes relatively many photo-catalyst member 3 installed to radiate UV light closely and strongly which causes strong photo-catalytic reaction.

Hereinafter, another embodiment of the present invention will be explained where the detail explanation of the same or similar component with that of the first embodiment stated above will be omitted and the different component will be explained in detail. Also, any component shown in the first embodiment or different any embodiment would be adopted to any following embodiment, which is not explained in detail and shown in FIG.

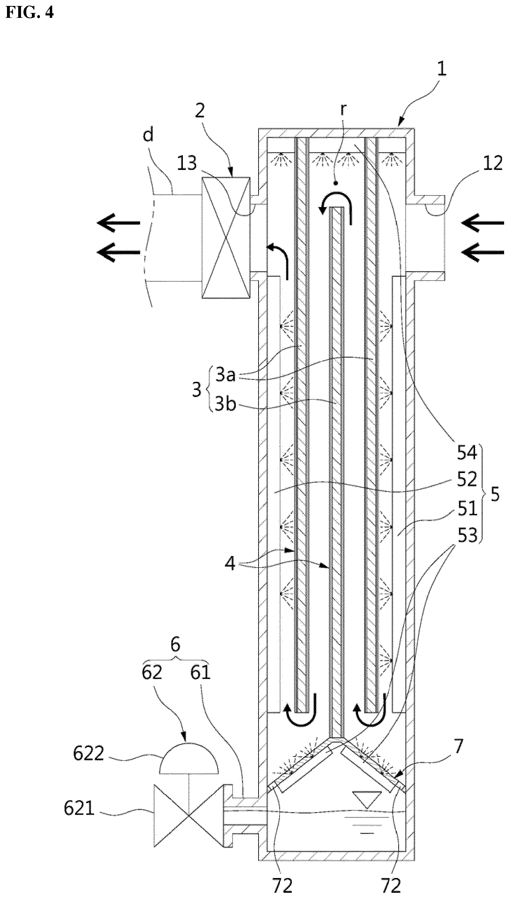

FIG. 4 is a diagram to explain the air conditioner using light according to second embodiment of the present invention, showing simplified longitudinal section structure.

Referring to FIG. 4, the air conditioner using light according to the second embodiment of the present invention comprises air conditioning enclosure 1 having inlet and outlet for air flow into air conditioning room which is formed inside; air blow means 2 causing air flow that the air comes through the inlet and then goes out through the outlet; photo-catalyst member 3 installed in the air conditioning room and formed with photo-catalyst; moisture removing means 4 installed in the air conditioning room for removing moisture from the air which comes through the inlet; light emitting means 5 providing the photo-catalyst member with the light for photocatalytic reaction; and moisture discharge means 6 installed to discharge the moisture from the air conditioning room, and a plurality of the photo-catalyst member 3 are provided in order to maximize the air cleaning and the removal of the moisture in the air.

In more detail, the plural photo-catalyst members are installed crisscross to make zigzag path of air flow and comprised of upper-fixing photo-catalyst member 3a which is installed to be hang from upper part of the air condition enclosure and lower-fixing photo-catalyst member 3b which is installed at the moisture discharge means 7 stated below.

Also, the moisture discharge means 7 is installed slantly in the lower part of the air conditioning room to make water drainage easy and the lower-fixing photo-catalyst member 3b installed.

The moisture discharge means consists of transparent planar surface member of the shape of ' 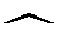 ', and has drain hole 72 at low site of its slant plane.

The light emitting means 5 comprises outer light emitting part 51 installed on the inner surface of the outer of the air conditioning enclosure 1; inner light emitting part 52 installed on the inner surface of the inner of the air conditioning enclosure 1; lower light emitting part 53 installed at the moisture discharge means 7; and upper light emitting part 54 installed in the upper part of the air conditioning room.

Reference mark d in FIG. 4 indicates duct connected to the outlet 13 of the air conditioning enclosure 1 which is installed such that the cleaned and dried air of the air conditioning enclosure comes into the greenhouse

As for the operation of the air conditioner using the light according to the second embodiment in FIG. 4, the zigzag flow path which is made by the plural photo-catalyst members 3 makes the air staying relatively long, and stereoscopic light from the outer light emitting part 51, the inner light emitting part 52, the lower light emitting part 53, and upper light emitting part 54 makes the photocatalytic reaction strong to perform the moisture removal and the air cleaning effectively.

FIG. 5 is a diagram to explain the greenhouse with the air conditioner using light according to the first embodiment of the present invention, showing simplified longitudinal section structure.

Referring to FIG. 5, the greenhouse with the air conditioner using light according to the first embodiment of the present invention comprises greenhouse frame (not shown) which is constructed by binding of pipe or section steel vertically and horizontally and light transmission planar surface member 8 which is installed on the greenhouse frame and formed of transparent glass, transparent vinyl. Also the air conditioner according to the first or second embodiment is installed in the side wall of the greenhouse.

On the other hand, the greenhouse with the air conditioner using light according to the first embodiment of the present invention comprises sensor module (not shown) for acquiring growing environmental data of the inside of the greenhouse, and controller (not shown) for monitoring the greenhouse with the growing environment data from the sensor module and for comparing predetermined data with the monitored data to control the drive of the air blow means 2 and the light emitting means 5. Herein, the controller could be comprised of input part (not shown) for inputting operation command of the air conditioner (p) and display for the operational state of the air conditioner(p).

The sensor module would be implemented with various sensing means such as temperature sensor, humidity sensor, illuminometer, pH sensor, electrical conductivity sensor, CO₂ sensor, and image sensor to acquire the growing environmental data in the greenhouse.

As the above stated air conditioner using the light is installed in the side wall of the greenhouse and the air blow means 2 is operated to make the air in the greenhouse come into the air conditioning enclosure, the photocatalytic reaction by the light emitting means 5 and the photo-catalyst member 3 removes the moisture from the air to adjust the humidity. Also, after various kinds of the pollutants such as volatile organic material in the air of the greenhouse are oxidized and decomposed, the cleaned and sterilized air is recirculated into the greenhouse through the outlet 13 so that the inner space of the greenhouse is made good environment to grow the crops.

Also, the air conditioner stated above comprises thin enclosure to be installed easily in the wall such as the side wall of the greenhouse and minimizes thermal loss due to the open of the side windows. Also, the air conditioning enclosure 1 consists of the light-transmission planar surface member for permitting the incident rays of the sun light so that the bad affection to the growth of the crops is decreased with the incident rays of the sun light. In addition, the costs of the energy is saved by decreasing operational hours of the light emitting means owing to the photocatalytic reaction of the sun light during the day time.

Also, the air conditioner stated above is available as a CO₂ gas facility, which provides CO₂ generated by the catalytic reaction to the greenhouse, to save cost of purchasing CO₂ gas or installment cost of the CO₂ gas facility because CO₂ gas is required and generally used to promote the growth and the photosynthesis of crops.

The above embodiments are just examples to implement the air conditioner using the light and the greenhouse including the same according to the present invention. Therefore, the present invention is not limited by the embodiments described above. The various modifications can be made based on the described embodiments and the illustrated figures by those skilled in the art without departing from the scope of the invention as defined by the appended claims.

### REFERENCE NUMERAL

1 : air conditioning enclosure
2 : air blow means
3 : photo-catalyst member
3a : upper-fixing photo-catalyst member
3b : lower-fixing photo-catalyst member
4 : moisture removing means
5 : light emitting means
6 : moisture discharge means
7 : moisture discharge member
8 : light-transmission planar surface member
12 : inlet
13 : outlet
31 : planar surface member
32 : photo-catalyst layer
51 : outer light emitting part
52 : inner light emitting part
53 : lower light emitting part
54 : upper light emitting part
61 : nozzle
62 : drain valve
P : air conditioner using light
r : air conditioning room

## Claims

1. Air conditioner (P) for a greenhouse which light is used in, comprising:
air conditioning enclosure (1) having inlet (12) and outlet (13) for air flow into air conditioning room (r) which is formed inside;
air blow means (2) causing air flow that the air comes through the inlet and then goes out through the outlet;
photo-catalyst member (3) installed in the air conditioning room and formed with photo-catalyst;
moisture removing means (4) installed in the air conditioning room for removing moisture from the air which comes through the inlet;
light emitting means (5) providing the photo-catalyst member with the light for photocatalytic reaction; and
moisture discharge means (6) installed to discharge the moisture from the air conditioning room (r),
wherein the photo-catalyst member (3) is comprised of planar surface member (31) with photo-catalytic layer (32) having photo-catalyst material, **characterised in that**
the moisture removing means (4) is comprised of hydrophobic coating layer which is stacked over the planar surface member, and
the air conditioning enclosure (1) has entirely or partially transparent upper part to permit the inflow of sun light.

2. The air conditioner for a greenhouse according to claim 1, **characterized in that** the planar surface member is formed of non-woven fabric or woven fabric, and
the hydrophobic coating layer has hydrophobic compound stacked over the non-woven fabric or the woven fabric, or hydrophobic compound stacked over filament yarn which forms the non-woven or woven fabric.

3. The air conditioner for a greenhouse according to claim 1, **characterized in that** plural photo-catalyst members are installed to make zigzag flow path of the air flow.

4. The air conditioner for a greenhouse according to claim 3, **characterized in that**
the moisture discharge means is installed on a slant in the lower part of the air conditioning room, and
the photo-catalyst member has upper-fixing photo-catalyst member which is installed to be hung from upper part of the air condition enclosure and lower-fixing photo-catalyst member which is installed at the moisture discharge means.

5. The air conditioner for a greenhouse according to claim 4, **characterized in that**
the moisture discharge means is formed of transparent planar surface member of the shape of ' 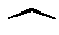 ', and
the light emitting means is implemented with plural UV light emitting diodes arranged on the printed circuit board, and comprises outer light emitting part installed on the inner surface of the outer of the air conditioning enclosure; inner light emitting part installed on the inner surface of the inner of the air conditioning enclosure; lower light emitting part installed at the moisture discharge means; and upper light emitting part installed in the upper part of the air conditioning room.

6. The air conditioner for a greenhouse according to claim 1, **characterized in that**
the light emitting means is the shape of a stick so as to be transversely installed in the air conditioning enclosure, and
the photo-catalyst member is formed with woven fabric which has photo-catalytic layer and is installed to be crisscross for the light emitting means.

7. Greenhouse comprising:
greenhouse frame;
light-transmission plate installed on the greenhouse frame; and
air conditioner of claim 1 installed in the side wall of the greenhouse or ceiling of the greenhouse.

8. The greenhouse according to claim 7, further comprising:
sensor module comprising one or more among temperature sensor, humidity sensor, illuminometer, pH sensor, electrical conductivity sensor, CO₂ sensor, and image sensor to get growing environment data in the greenhouse; and
controller monitoring the greenhouse with the growing environment data from the sensor module and comparing predetermined data with the monitored data to control the drive of the air blow means and the light emitting means.

## Patentansprüche

1. Klimaanlage (P) für ein Gewächshaus, in dem Licht verwendet wird, umfassend:
ein Klimaanlagengehäuse (1) mit Einlass (12) und Auslass (13) für den Luftstrom in den Klimaanlagenraum (r), der im Inneren gebildet ist;
ein Luftblasmittel (2), das einen Luftstrom verursacht, so dass die Luft durch den Einlass kommt und dann durch den Auslass austritt;
ein Photokatalysatorelement (3), das in dem Klimaanlagenraum installiert und mit dem Photokatalysator gebildet ist;
ein Feuchtigkeitsableitmittel (4), das im Klimaanlagenraum installiert ist, um Feuchtigkeit aus der Luft zu entfernen, die durch den Einlass kommt;
ein Lichtemissionsmittel (5), das das Photokatalysatorelement mit dem Licht für die photokatalytische Reaktion versorgt; und
ein Feuchtigkeitsableitmittel (6) das dafür installiert ist, die Feuchtigkeit aus dem Klimaanlagenraum (r) abzuleiten,
wobei das Photokatalysatorelement (3) aus einem planaren Oberflächenelement (31) mit einer photokatalytischen Schicht (32) mit Photokatalysatormaterial besteht,
**dadurch gekennzeichnet, dass**
das Feuchtigkeitsableitmittel (4) aus einer hydrophoben Beschichtungsschicht besteht, die über dem planaren Oberflächenelement aufgeschichtet ist, und
das Klimagehäuse (1) einen ganz oder teilweise transparenten oberen Teil aufweist, um das Einströmen von Sonnenlicht zu ermöglichen.

2. Klimaanlage für ein Gewächshaus nach Anspruch 1, **dadurch gekennzeichnet, dass** das planare Oberflächenelement aus Vlies oder Gewebe besteht, und die hydrophobe Beschichtungsschicht eine hydrophobe Verbindung aufweist, die über dem Vlies oder dem Gewebe aufgeschichtet ist, oder eine hydrophobe Verbindung aufweist, die über dem Filamentgarn aufgeschichtet ist, das das Vlies oder das Gewebe bildet.

3. Klimaanlage für ein Gewächshaus nach Anspruch 1, **dadurch gekennzeichnet, dass** mehrere Photokatalysatorelemente installiert sind, um einen ZickZack-Strömungsweg des Luftstroms herzustellen.

4. Klimaanlage für ein Gewächshaus nach Anspruch 3, **dadurch gekennzeichnet, dass**
das Feuchtigkeitsableitmittel schräg im unteren Teil des Klimaanlagenraums installiert ist, und
das Photokatalysatorelement Folgendes aufweist: ein oberes fixierendes Photokatalysatorelement, das dafür installiert ist, an dem oberen Teil des Klimagehäuses aufgehängt zu werden, und ein unteres fixierendes Photokatalysatorelement, das an dem Feuchtigkeitsableitmittel installiert ist.

5. Klimaanlage für ein Gewächshaus nach Anspruch 4, **dadurch gekennzeichnet, dass** das Feuchtigkeitsableitmittel aus einem transparenten planaren Oberflächenelement in der Form von " 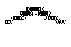 " besteht und
das Leuchtmittel mit mehreren UV-Leuchtdioden implementiert ist, die auf der Leiterplatte angeordnet sind, und Folgendes umfasst: ein äußeres lichtemittierendes Teil, das an der Innenfläche der Außenseite des Klimagehäuses installiert ist; ein inneres lichtemittierendes Teil, das an der Innenfläche des Inneren des Klimagehäuses installiert ist; ein niedrigeres lichtemittierendes Teil, das an dem Feuchtigkeitsableitmittel installiert ist; und ein oberes lichtemittierendes Teil, das im oberen Teil des Klimaanlagenraums installiert ist.

6. Klimaanlage für ein Gewächshaus nach Anspruch 1, **dadurch gekennzeichnet, dass**
das lichtemittierende Mittel die Form eines Stabes aufweist, um quer in das Klimagehäuse eingebaut zu werden, und
das Photokatalysatorelement mit einem Gewebe gebildet ist, das eine photokatalytische Schicht aufweist und so installiert ist, dass es für das lichtemittierende Mittel kreuz und quer verläuft.

7. Gewächshaus, das Folgendes umfasst:
einen Gewächshausrahmen;
eine Lichtübertragungsplatte, die an dem Gewächshausrahmen installiert ist; und
die Klimaanlage nach Anspruch 1, die in der Seitenwand des Gewächshauses oder der Decke des Gewächshauses installiert ist.

8. Gewächshaus nach Anspruch 7, das ferner Folgendes umfasst:
ein Sensormodul, das einen Temperatursensor, einen Feuchtigkeitssensor, einen Illuminometer, einen pH-Sensor, einen elektrischen Leitfähigkeitssensor, einen CO2-Sensor und/oder einen Bildsensor umfasst, um Wachstumsumgebungsdaten im Gewächshaus zu erhalten; und
eine Steuerung, die das Gewächshaus mit den Wachstumsumgebungsdaten vom Sensormodul überwacht und vorbestimmte Daten mit den überwachten Daten vergleicht, um den Antrieb des Luftblasmittels und des Lichtemissionsmittels zu steuern.

## Revendications

1. Climatiseur (P) pour une serre dans laquelle de la lumière est utilisée, comprenant :
une enceinte de climatisation (1) ayant une entrée (12) et une sortie (13) pour un flux d'air jusque dans une salle de climatisation (r) qui est formée à l'intérieur ;
un moyen de soufflage d'air (2) provoquant un flux d'air de sorte que l'air entre à travers l'entrée et puis sort à travers la sortie ;
un élément photocatalyseur (3) installé dans la salle de climatisation et formé avec un photocatalyseur ;
un moyen d'élimination d'humidité (4) installé dans la salle de climatisation destiné à éliminer l'humidité de l'air qui entre à travers l'entrée ;
un moyen d'émission de lumière (5) fournissant à l'élément photocatalyseur la lumière pour la réaction photocatalytique ; et
un moyen d'évacuation d'humidité (6) installé pour évacuer l'humidité de la salle de climatisation (r),
dans lequel l'élément photocatalyseur (3) est composé d'un élément de surface plane (31) avec une couche photocatalytique (32) ayant un matériau photocatalyseur,
**caractérisé en ce que** le moyen d'élimination d'humidité (4) est composé d'une couche de revêtement hydrophobe qui est empilée sur l'élément de surface plane, et
l'enceinte de climatisation (1) a une partie supérieure entièrement ou partiellement transparente pour permettre le flux entrant de la lumière du soleil.

2. Climatiseur pour une serre selon la revendication 1, **caractérisé en ce que** l'élément de surface plane est formé de tissu non tissé ou de tissu tissé, et la couche de revêtement hydrophobe a un composé hydrophobe empilé par-dessus le tissu non tissé ou le tissu tissé, ou un composé hydrophobe empilé par-dessus un fil de filament qui forme le tissu non tissé ou tissé.

3. Climatiseur pour une serre selon la revendication 1, **caractérisé en ce que** plusieurs éléments photocatalyseurs sont installés pour faire un chemin de flux en zigzag du flux d'air.

4. Climatiseur pour une serre selon la revendication 3, **caractérisé en ce que**
le moyen d'évacuation d'humidité est installé sur une pente dans la partie inférieure de la salle de climatisation, et
l'élément photocatalyseur a un élément photocatalyseur à fixation supérieure qui est installé pour être accroché depuis la partie supérieure de l'enceinte de climatisation et un élément photocatalyseur à fixation inférieure qui est installé au niveau du moyen d'évacuation d'humidité.

5. Climatiseur pour une serre selon la revendication 4, **caractérisé en ce que** le moyen d'évacuation d'humidité est formé d'un élément de surface plane transparent en forme de ' 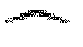 ', et
le moyen d'émission de lumière est mis en œuvre avec plusieurs diodes émettrices de lumière ultraviolette agencées sur la carte de circuit imprimé, et comprend une partie émettrice de lumière externe installée sur la surface interne de l'extérieur de l'enceinte de climatisation ; une partie émettrice de lumière interne installée sur la surface interne de l'intérieur de l'enceinte de climatisation ; une partie émettrice de lumière inférieure installée au niveau du moyen d'évacuation d'humidité ; et une partie émettrice de lumière supérieure installée dans la partie supérieure de la pièce de climatisation.

6. Climatiseur pour une serre selon la revendication 1, **caractérisé en ce que**
le moyen d'émission de lumière a la forme d'un bâton de manière à être installé de manière transversale dans l'enceinte de climatisation, et
l'élément photocatalyseur est formé avec un tissu tissé qui a une couche photocatalytique et est installé pour être entrelacé pour le moyen d'émission de lumière.

7. Serre comprenant :
une structure de serre ;
une plaque de transmission de lumière installée sur la structure de serre ; et
le climatiseur de la revendication 1 installé dans la paroi latérale de la serre ou le plafond de la serre.

8. Serre selon la revendication 7, comprenant en outre :
un module de capteur comprenant un ou plusieurs capteurs parmi un capteur de température, un capteur d'humidité, un luminomètre, un capteur de pH, un capteur de conductivité électrique, un capteur de CO₂, et un capteur d'image pour obtenir des données d'environnement de culture dans la serre ; et
un dispositif de commande surveillant la serre avec les données d'environnement de culture du module de capteur et comparant des données prédéterminées avec les données surveillées pour commander l'entraînement du moyen de soufflage d'air et le moyen d'émission de lumière.
